(19) Europäisches Patentamt
European Patent Office
Office européen des brevets

(11) EP 4 428 986 A1

(12) # EUROPEAN PATENT APPLICATION

(43) Date of publication:
**11.09.2024 Bulletin 2024/37**

(21) Application number: **23191793.1**

(22) Date of filing: **16.08.2023**

(51) International Patent Classification (IPC):
***H01M 10/42** (2006.01)* ***H01M 10/44** (2006.01)*
*H01M 4/505 (2010.01)* *H01M 4/525 (2010.01)*
*H01M 10/0525 (2010.01)* *H01M 10/52 (2006.01)*

(52) Cooperative Patent Classification (CPC):
**H01M 10/4285; H01M 10/44;** H01M 4/505; H01M 4/525; H01M 10/0525; H01M 10/52

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.03.2023 JP 2023037435**

(71) Applicant: **Kabushiki Kaisha Toshiba**
**Minato-ku**
**Tokyo (JP)**

(72) Inventors:
- **MORIMOTO, Sayaka**
  **Tokyo (JP)**
- **YAGI, Ryosuke**
  **Tokyo (JP)**

(74) Representative: **Marks & Clerk LLP**
**15 Fetter Lane**
**London EC4A 1BW (GB)**

(54) **INFORMATION PROCESSING DEVICE, BATTERY SYSTEM, PROGRAM, AND INFORMATION PROCESSING METHOD**

(57) An information processing device of an embodiment includes a processing circuit. The processing circuit calculates the capacity decreasing speed of the secondary battery based on the change amount in the capacity maintenance ratio of the secondary battery, calculates the gas generation speed of the secondary battery based on the capacity decreasing speed, and calculates the gas generation timing of the secondary battery based on the gas generation speed.

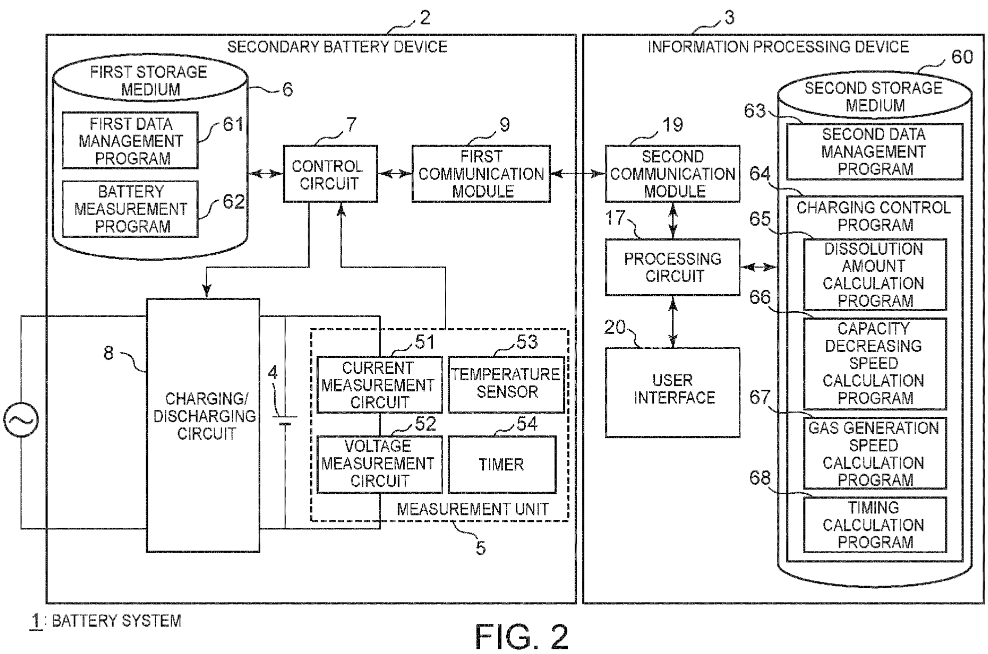


FIG. 2

EP 4 428 986 A1

## Description

CROSS-REFERENCE TO RELATED APPLICATIONS

This application is based upon and claims the benefit of priority from Japanese Patent Application No. 2023-037435 filed on March 10, 2023, and the entire contents of which are incorporated herein by reference.

FIELD

Embodiments described herein relate generally to an information processing device, a battery system, a program, and an information processing method.

BACKGROUND

A phenomenon in which when charging and discharging of a secondary battery are repeated a certain number of times, gas is generated and a cell of the secondary battery expands is known.
On the other hand, the cause of gas generation has not been made clear, and the gas generation timing has not been able to be calculated.

JP 2011-239573 A
Abir Ghosh et al, Journal of The Electrochemical Society (2021), 168, 020509.

BRIEF DESCIPRION OF THE DRAWINGS

Fig. 1 illustrates a relationship between the cycle number of charging/discharging of a lithium ion secondary battery and the thickness of a cell.
Fig. 2 is a block diagram illustrating an example of a schematic diagram of a battery system.
Fig. 3 is a flowchart showing an example of a measurement method of an SOH of a lithium ion secondary battery.
Fig. 4 is a flowchart showing an example of processing in gas generation timing calculation of a lithium ion secondary battery.
Fig. 5 is a graph showing an example of a relationship between a capacity decreasing speed and a gas generation speed of a lithium ion secondary battery.
Fig. 6 is a flowchart showing an example of processing in charging of a lithium ion secondary battery.

DETAILED DESCRIPTION

Hereinafter, embodiments for carrying out the invention will be described with reference to the drawings.
The embodiments do not limit the present invention. The same parts in the drawings are denoted by the same reference numerals, detailed description thereof will be omitted as appropriate, and different parts will be described. Note that the drawings are schematic or conceptual, and the relationship between the thickness and the width of each part, the ratio of the sizes between parts, and the like are not necessarily the same as actual ones. Even in a case of representing the same part, dimensions and ratios may be represented differently from each other depending on the drawings.
In the description of each embodiment, a lower limit voltage Vmin and an upper limit voltage Vmax of the secondary battery are defined. In the present embodiment, a state where the voltage becomes the lower limit voltage Vmin when discharging or charging is performed under a predetermined condition is defined as a state where a state of charge (SOC) value is 0%, and a state where the voltage becomes the upper limit voltage Vmax when discharging or charging is performed under a predetermined condition is defined as a state where the SOC value is 100%. The charging capacity (charging charge amount) until the SOC value becomes from 0% to 100% in charging under a predetermined condition, or the discharging capacity (discharging charge amount) until the SOC value becomes from 100% to 0% in discharging under a predetermined condition is defined as a battery capacity. The ratio of the residual charge amount (remaining capacity) to the battery capacity of a secondary battery until the SOC value becomes 0% is the SOC of the secondary battery. When the secondary battery is repeatedly used, the battery capacity decreases. The battery capacity after repeatedly used with respect to the initial battery capacity of the secondary battery is defined as a capacity maintenance ratio. In the present specification, the capacity maintenance ratio of a secondary battery is referred to as state of health (SOH) . The initial battery capacity indicates a battery capacity at the time of factory shipment, for example, and is defined as a state where the SOH is 100%. By repeatedly using the secondary battery, the SOH value gradually decreases from 100%. Charging and discharging may be collectively referred to as charging/discharging.

The secondary battery in each embodiment may be formed of a single cell (single battery), or may be a battery module or a cell block formed by electrically connecting a plurality of single cells. When the secondary battery is formed of a plurality of single cells, the plurality of single cells may be electrically connected in series, or the plurality of single cells may be electrically connected in parallel. In the secondary battery, both a series connection structure in which the plurality of single cells is connected in series and a parallel connection structure in which the plurality of single cells is connected in parallel may be formed. The secondary battery may be in the form of a battery string, a battery array, or the like in which a plurality of battery modules is electrically connected. In a battery module in which a plurality of single cells is electrically connected, each of the plurality of single cells may be individually controlled, or some of the plurality of single cells may be grouped and controlled for each group. The secondary battery includes a positive electrode and a negative electrode as electrodes, and the positive electrode and the negative electrode have opposite polarities to each other. In each of the positive electrode and the negative electrode of the secondary battery, the potential changes in response to a change in the state of charge. In each of the positive electrode and the negative electrode, there is a predetermined relationship between the potential and the state of charge. Therefore, for each of the electrodes of the secondary battery, the potential can be calculated based on the state of charge, and the state of charge can be calculated based on the potential. In the present description, embodiments will be described with a lithium ion secondary battery as an example of a secondary battery. The type of the secondary battery is not limited to the lithium ion secondary battery.

Fig. 1 illustrates the relationship between the cycle number of charging/discharging of a lithium ion secondary battery and the thickness of a cell (battery). In Fig. 1, a result of a case where the SOC is changed between 0% and 100% at 45 °C is indicated by black circles and a solid line a, a result of a case where the SOC is changed between 0% and 100% at 55 °C is indicated by white circles and a broken line b, and a result of a case where the SOC is changed between 0% and 100% at 65 °C is indicated by black triangles and a dotted line c. In the result indicated by the solid line a, the thickness of the cell rapidly increases around 1000 cycles, and in the result indicated by the broken line b, the thickness of the cell rapidly increases around 500 cycles. In the result indicated by the dotted line c having a higher temperature at the time of measurement compared with the solid line a and the broken line b, the thickness of the cell rapidly increases around 200 cycles. As described above, the timing of gas generation varies depending on the use state and the use environment of the lithium ion secondary battery, but it has been difficult to accurately calculate this timing. In the present specification, the timing at which gas is generated in the cell of the lithium ion secondary battery, the generated gas cannot be dissolved in the electrolyte solution, and the cell starts to expand may be referred to as "gas generation timing".

(First embodiment)

Fig. 2 is a block diagram illustrating an example of a schematic diagram of a battery system 1 in the present embodiment. In the present embodiment, the battery system 1 includes an information processing device 3 and a secondary battery device 2. The lithium ion secondary battery 4 is included in the secondary battery device 2. In addition to the lithium ion secondary battery 4, the secondary battery device 2 includes a measurement unit 5, a first storage medium 6, a control circuit 7, a charging/discharging circuit 8, and a first communication module 9. The measurement unit 5 includes a current measurement circuit 51 of the lithium ion secondary battery 4 and a voltage measurement circuit 52 that measures the voltage. The measurement unit 5 may further include a temperature sensor 53 and a timer 54. The first storage medium 6 includes a first data management program 61 that can manage entry and exit of data, and a battery measurement program 62 for measuring the capacity maintenance ratio of the lithium ion secondary battery 4. The information processing device 3 includes a second storage medium 60, a processing circuit 17, and a second communication module 19. The information processing device 3 may further include a user interface 20. The second storage medium 60 stores a second data management program 63 that can manage entry and exit of data and a charging control program 64 that can control charging of the lithium ion secondary battery 4. The charging control program 64 includes a dissolution amount calculation program 65 that can calculate a gas dissolution amount of the lithium ion secondary battery 4, a capacity decreasing speed calculation program 66 that can calculate a capacity decreasing speed from the capacity maintenance ratio of the lithium ion secondary battery 4 calculated by the battery measurement program 62, a gas generation speed calculation program 67 that can calculate a gas generation speed from the capacity decreasing speed, and a timing calculation program 68 that can calculate timing at which gas is generated from the gas generation speed and the gas dissolution amount.

Examples of the secondary battery device 2 include a large-power storage device for a power system, a smartphone, a vehicle, a stationary power source device, a robot, and a drone. Examples of the vehicle to be the secondary battery device 2 include a railway vehicle, an electric bus, an electric car, a plug-in hybrid car, and an electric motorcycle.

The positive electrode of the lithium ion secondary battery 4 of the present embodiment is made of a material containing an NCM-based material. An approximate composition ratio of the NCM material is nickel : cobalt : manganese = 8 : 1 : 1, and in $LiNi_xCo_yMn_{(1-x-y)}O_2$, x is 0.5 or more and 0.9 or less. y is 0.05 or more and 0.45 or less. On the other hand, the negative electrode is made of a material containing lithium titanate (LTO), niobium titanium oxide (NTO), or carbon.

The measurement unit 5 can detect and measure parameters related to the lithium ion secondary battery 4 at a plurality of measurement time points in a state where the lithium ion secondary battery 4 is being charged or discharged.

The current measurement circuit 51 acquires a current value of the lithium ion secondary battery 4.

The voltage measurement circuit 52 acquires a voltage value of the lithium ion secondary battery 4.

The temperature sensor 53 is directly attached to the lithium ion secondary battery 4, for example, and periodically acquires the temperature of the lithium ion secondary battery 4.

The timer 54 can measure the time when the parameter related to the lithium ion secondary battery 4 is measured.

The first storage medium 6 is a storage device called a main storage device or an auxiliary storage device. Examples of the first storage medium 6 include a magnetic disk, an optical disk (CD-ROM, CD-R, DVD, or the like), a magneto-optical disk (MO or the like), and a semiconductor memory. The secondary battery device 2 may be provided with only one memory or the like serving as the first storage medium 6, or may be provided with a plurality of memories or the like. The first storage medium 6 stores a program executed by the control circuit 7 and data output during execution of the program, data of a result of execution of the program, and data such as a measurement result of the measurement unit 5.

The control circuit 7 is constituted with a processor, an integrated circuit, or the like, and the processor or the like constituting the control circuit 7 includes any of a central processing unit (CPU), an application specific integrated circuit (ASIC), a microcomputer, a field programmable gate array (FPGA), and a digital signal processor (DSP). The control circuit 7 may be constituted with one processor or the like, or may be constituted with a plurality of processors or the like. The control circuit 7 reads and executes a program stored in the first storage medium 6, and controls charging and discharging of the lithium ion secondary battery 4 via the charging/discharging circuit 8. The control circuit 7 switches the state of the charging/discharging circuit 8, for example, thereby switching between a state where the lithium ion secondary battery 4 is charged and a state where the lithium ion secondary battery 4 is discharged. In a state where the lithium ion secondary battery 4 is charged, the control circuit 7 controls driving of a power source that supplies power to the lithium ion secondary battery 4 and driving of the charging/discharging circuit 8, thereby adjusting the magnitude of the current input to the lithium ion secondary battery 4 and the like.

The control circuit 7 performs processing by executing a program or the like stored in the first storage medium 6 or the like. The control circuit 7 reads the battery measurement program 62 from the first storage medium 6 and measures the capacity maintenance ratio (SOH) of the lithium ion secondary battery 4. The control circuit 7 acquires, from the measurement unit 5, data related to the current value and the voltage value of the lithium ion secondary battery 4 and other measurement results of parameters related to the lithium ion secondary battery 4, and transmits, to the information processing device 3 via the first communication module 9, measurement data including these measurement results and data related to the calculated capacity maintenance ratio (SOH). The measurement data includes a measurement value and a change amount (time history) at each of the plurality of measurement time points. Furthermore, the measurement data may include a change amount (time history) of the current of the lithium ion secondary battery 4, a change amount (time history) of the voltage of the lithium ion secondary battery 4, and a change amount (time history) of the temperature of the lithium ion secondary battery 4. Then, the processing circuit 17 of the information processing device 3 receives, via the second communication module 19, data transmitted from the secondary battery device 2.

In the secondary battery device 2, a battery management unit (BMU) is constituted by the control circuit 7, the first storage medium 6, and the like.

The charging/discharging circuit 8 is mounted with, for example, an AC/DC converter, a transformation circuit, and the like. In the charging/discharging circuit 8, alternating-current power from an external power source is converted into direct-current power by the AC/DC converter or the like, and a voltage of power supplied from the external power source is transformed into a voltage corresponding to the lithium ion secondary battery 4 by the transformation circuit or the like. Due to this, direct-current power is supplied to the lithium ion secondary battery 4 at a voltage corresponding to the lithium ion secondary battery 4, and a charging current is input to the lithium ion secondary battery 4.

The first communication module 9 includes a communication interface of the secondary battery device 2. The control circuit 7 can communicate with a processing device outside the secondary battery device 2 including the information processing device 3 via the first communication module 9.

The information processing device 3 is a processing device (computer) such as a server provided outside the secondary battery device 2, and can communicate with the secondary battery device 2 via a network.

The second storage medium 60 included in the information processing device 3 is a storage device called a main storage device or an auxiliary storage device. For example, the information processing device 3 may be provided with only one storage device serving as the second storage medium 60, or may be provided with a plurality of storage devices.

The processing circuit 17 included in the information processing device 3 is constituted with a processor, an integrated circuit, or the like, and includes any of a CPU, an ASIC, a microcomputer, an FPGA, a DSP, and the like as a processor constituting the processing circuit 17. The processing circuit 17 may be constituted with one processor or the like, or may be constituted with a plurality of processors or the like. The processing circuit 17 performs processing by executing a program or the like stored in the second storage medium 60. In the example of Fig. 2, by executing the second data management program 63, the processing circuit 17 writes data to the second storage medium 60 and reads data from the second storage medium 60. By executing the charging control program 64, the processing circuit 17 performs processing described later in the control of the lithium ion secondary battery 4.

The second communication module 19 includes a communication interface of the processing device constituting the information processing device 3. The processing circuit 17 communicates with a device or the like outside the information processing device 3 including the secondary battery device 2 via the second communication module 19.

The user interface 20 can output information related to information processing of the lithium ion secondary battery 4 and accept an input related to information processing of the lithium ion secondary battery 4 by the user and the like of the information processing device 3 and the battery system 1. Therefore, the user interface 20 is provided with an output device that outputs information related to information processing of the lithium ion secondary battery 4. The output device outputs information to the outside by screen display, sound transmission, vibration, or the like. In response to an instruction from the processing circuit 17, the output device can output, to the user, gas generation timing, a charging and discharging mode, a notice of battery replacement, and the like. The user interface 20 is provided with an input device to which a user's operation is input. The input device includes, for example, any one or more of a button, a mouse, a touchscreen, a keyboard, and a voice input device. Note that the user interface 20 may be provided separately from the processing device constituting the information processing device 3.

The control circuit 7 reads and executes the battery measurement program 62, and measures, as the capacity maintenance ratio of the lithium ion secondary battery 4, the SOH of the lithium ion secondary battery 4 of a measurement target. The battery measurement program 62 includes a setting program for setting a voltage value A and a voltage value B, and a first count program for counting the number of times N the voltage of the lithium ion secondary battery 4 becomes equal to or higher than the set voltage value A during charging/discharging. The voltage value A is a value larger than the voltage value B. The battery measurement program 62 includes: a second count program for counting the number of times M the voltage of the lithium ion secondary battery 4 becomes equal to or higher than the set voltage value A while charging/discharging is performed and then the voltage of the lithium ion secondary battery 4 becomes equal to or lower than a determined voltage value B; a calculation program for calculating N - M (difference between N and M) with reference to the numbers of count N and M performed by the first count program and the second count program described above; and a determination program for determining the SOH of the lithium ion secondary battery 4 based on the value of N - M.

Fig. 3 is a flowchart showing an example of the flow of a method by which the control circuit 7 that reads and executes the battery measurement program 62 measures the SOH of the lithium ion secondary battery 4.

In S1, the control circuit 7 can set the voltage value A, the voltage value B, and a value X. In the present embodiment, the upper limit voltage Vmax of the lithium ion secondary battery 4 is set as the voltage value A, and the lower limit voltage Vmin is set as the voltage value B. The value X is used for determining the SOH of the lithium ion secondary battery 4. The method of determining the upper limit voltage Vmax includes identifying a positive electrode active material in the lithium ion secondary battery 4, and determining from, for example, a standard electrode potential of the identified positive electrode active material with respect to lithium ions. The method of determining the lower limit voltage Vmin is the same as the setting method of the upper limit voltage Vmax described above, and includes taking out the negative electrode from the lithium ion secondary battery 4, identifying the composition of the active material contained in the negative electrode, and determining from the value obtained from the standard electrode potential of the identified active material with respect to lithium ions. The value X is determined based on the data of the capacity maintenance ratio of the lithium ion secondary battery 4. Data representing a temporal change in the capacity maintenance ratio is read, and a value X is determined so as to suppress the capacity maintenance ratio of the lithium ion secondary battery 4 in the data from becoming equal to or less than a threshold that is appropriately set. The threshold of the capacity maintenance ratio to be determined can be changed depending on the purpose of use of the lithium ion secondary battery 4 of the measurement target. The data of the capacity maintenance ratio may be included in advance in the first storage medium 6, or may be obtained by downloading the data each time from the information processing device 3 outside the secondary battery device 2, a cloud, or the like.

In S2, the control circuit 7 performs counting when the voltage of the lithium ion secondary battery 4 measured by the voltage measurement circuit 52 becomes equal to or higher than the set voltage value A. In the present embodiment, the number of times the voltage of the lithium ion secondary battery 4 becomes equal to or higher than the upper limit voltage Vmax is counted as N.

In S3, the control circuit 7 performs counting when the voltage of the lithium ion secondary battery 4 measured by the voltage measurement circuit 52 becomes equal to or higher than the set voltage value A and then becomes equal to or lower than the set voltage value B. In the present embodiment, the number of times the voltage of the lithium ion secondary battery 4 becomes equal to or higher than the upper limit voltage Vmax and then becomes equal to or lower than the lower limit voltage Vmin is counted as M.

In S4, the control circuit 7 stores the numbers of times N and M.

In S5, from the numbers of times N and M stored in S4, the control circuit 7 calculates a value (value of N - M) obtained by subtracting the value M from the value N.

In S6, the control circuit 7 determines the SOH of the lithium ion secondary battery 4 based on the value of N - M calculated above. Specifically, the calculated value of N - M is compared with the value X determined in S1. Based on the comparison, the SOH of the lithium ion secondary battery 4 is determined. When the value of N - M is larger than the value X (YES in S7), it is determined in S8 that the SOH of the lithium ion secondary battery 4 has not decreased. On the other hand, when the value of N - M is not larger than the value X (NO in S7), it is determined that the SOH of the lithium ion secondary battery 4 has decreased in S9.

In S10, the control circuit 7 calculates and outputs the SOH based on the determination in S8 or S9. The SOH output in S10 is used as a first SOH in S22 or a second SOH in S24 described later.

For measurement of the SOH of the lithium ion secondary battery 4, in addition to the above-described method, other various calculation and determination methods such as a charging curve analysis method and a voltage standard deviation method can be used.

The data related to the calculated or determined SOH is stored in the first storage medium, the external storage device, or the like, and is output in response to a request in a case where the data is used for other arithmetic processing or the like. The output method is not particularly limited, and may be a file, an e-mail, an image, a sound, or light. For example, the control circuit 7 may be electrically connected to a display, a speaker, or the like, and a processing result may be output to another device. The output method and content may be determined in advance or may be selected each time.

Fig. 4 is a flowchart showing an example of processing in gas generation timing calculation of the lithium ion secondary battery 4. The processing shown in this flowchart is executed when charging of the lithium ion secondary battery 4 is started, and thereafter, the processing is called from the main routine at predetermined time intervals and repeatedly executed.

In S20, the processing circuit 17 acquires the weight and temperature of the electrolyte solution of the cell of the lithium ion secondary battery 4. For the weight of the electrolyte solution of the cell, a measurement value measured by a device outside the information processing device 3 transmitted to the processing circuit 17 via the second communication module 19 may be used, or a value saved in the second storage medium 60 or an external cloud as a known value may be used. For the temperature in the present embodiment, a value measured by the temperature sensor 53 transmitted to the processing circuit 17 via the second communication module 19 is used.

In S21, by reading and executing the dissolution amount calculation program 65, the processing circuit 17 can calculate the gas dissolution amount of the lithium ion secondary battery 4 based on the weight of the electrolyte solution of the lithium ion secondary battery 4 and the temperature of the electrolyte solution. The gas dissolution amount is an amount of gas such as $CO_2$ soluble in the electrolyte solution. When calculating the gas dissolution amount, the processing circuit 17 may refer to a lookup table or the like indicating the gas dissolution amount corresponding to the electrolyte solution amount and the operating temperature, or may calculate the gas dissolution amount by applying the electrolyte solution amount and the operating temperature to a predetermined calculation expression as parameters. This lookup table and the predetermined calculation expression are saved in the second storage medium 60 or a cloud outside the information processing device 3.

In S22, by reading and executing the charging control program 64, the processing circuit 17 acquires the SOH of the lithium ion secondary battery 4. This SOH is set to the first SOH. The SOH in the present embodiment is measured in the control circuit 7 through the above-described steps S1 to S10. The measured first SOH is transmitted to the information processing device 3 via the first communication module 9, and the processing circuit 17 acquires the first SOH via the second communication module 19.

In S23, by reading and executing the charging control program 64, the processing circuit 17 determines whether or not a predetermined time has elapsed since the first SOH is acquired in S22. For the measurement of the elapsed time, the time measured by the timer 54 may be used, or a value acquired from an external server or the like may be used. The cycle number may be used as a reference instead of the time. When the cycle number is used as a reference, it is determined whether or not the lithium ion secondary battery 4 has achieved a predetermined cycle number from the changes in current and voltage measured by the measurement unit 5. Here, when it is determined that the elapsed time or the cycle number performed has not reached a predetermined time or a predetermined cycle number, S23 is repeated until the elapsed time or the cycle number performed reaches the predetermined time or the predetermined cycle number. When it is determined that the elapsed time or the cycle number performed has reached the predetermined time or the predetermined cycle number, the process proceeds to S24.

In S24, by reading and executing the charging control program 64, the processing circuit 17 acquires the SOH of the lithium ion secondary battery 4. This SOH is set to the second SOH. The measurement method of the second SOH is similar to that of the first SOH, and the SOH is measured in the control circuit 7 through the above-described steps S1 to S10.

In S25, by reading and executing the capacity decreasing speed calculation program 66, the processing circuit 17 calculates the decreasing speed of the SOH of the lithium ion secondary battery 4 of the measurement target. The capacity decreasing speed is obtained by dividing the change amount in the capacity maintenance ratio, which is a difference between the first SOH and the second SOH, by a cycle number R of the lithium ion secondary battery 4. The cycle number R is the cycle number of the lithium ion secondary battery 4 repeated from when the first SOH is acquired in S22 to when the second SOH is acquired in S24. Therefore, the capacity decreasing speed, that is, the decreasing speed of the SOH is obtained by the following expression (1).

[Mathematical expression 1]

$$\text{Capacity decreasing speed [\%/cyc]} = \frac{\text{Change amount of capacity maintenance ratio}}{R} = \frac{\text{First SOH - Second SOH}}{R} \quad (1)$$

In S26, by reading and executing the gas generation speed calculation program 67, the processing circuit 17 calculates the gas generation speed based on the ratio between the capacity decreasing speed and the gas generation speed obtained in S25. The gas generation speed is a generation speed of gas generated from the electrode of the lithium ion secondary battery 4. The gas is a gas such as $CO_2$. Fig. 5 is a graph showing an example of the relationship between the capacity decreasing speed and the gas generation speed of the lithium ion secondary battery 4. In the graph of Fig. 5, the horizontal axis represents the capacity decreasing speed, and the vertical axis represents the gas generation speed. There is a correlation as illustrated in Fig. 5 between the capacity decreasing speed and the gas generation speed of the lithium ion secondary battery 4. The relationship between the capacity decreasing speed and the gas generation speed is saved in, for example, the second storage medium 60. However, the destination to save the relationship between the capacity decreasing speed and the gas generation speed is not limited to this. The processing circuit 17 reads an approximate expression or a lookup table corresponding to the graph of Fig. 5, and calculates the gas generation speed corresponding to the capacity decreasing speed obtained in S25 based on the ratio between the capacity decreasing speed and the gas generation speed. The relationship between the capacity decreasing speed and the gas generation speed may change depending on the operating conditions such as the operating temperature and the frequency of use of the lithium ion secondary battery 4. In this case, the processing circuit 17 selects an approximate expression or a lookup table suitable for the operating condition, and uses the approximate expression or the lookup table for calculation of the gas generation speed.

In S27, by reading and executing the timing calculation program 68, the processing circuit 17 can calculate the time from a predetermined time to the gas generation timing based on the gas generation speed. The predetermined time is, for example, a time at which the processing circuit 17 reads the timing calculation program 68, but is not limited to this time. Here, by executing the timing calculation program 68, the processing circuit 17 calculates the time required until the gas generation timing at which the gas such as $CO_2$ is generated more than the dissolution amount obtained in S21. Furthermore, the replacement timing of the lithium ion secondary battery 4 may be calculated from the gas generation timing. The gas generation timing and the replacement timing of the lithium ion secondary battery 4 may be based on time or may be based on the cycle number of the lithium ion secondary battery 4. When based on the cycle number, the processing circuit 17 can calculate the cycle number from a predetermined cycle number to the gas generation timing based on the gas generation speed. The predetermined cycle number is, for example, the cycle number of the lithium ion secondary battery 4 when the processing circuit 17 reads the timing calculation program 68, but is not limited to this cycle number.

In S28, the processing circuit 17 saves, into the second storage medium 60, the gas generation timing obtained in S27.

In S29, by reading and executing the charging control program 64, the processing circuit 17 compares the current time with the time of the gas generation timing calculated in S27, and determines whether or not the current time has reached the gas generation timing. As the current time, the time measured by the timer 54 may be used, or a value acquired from an external server or the like may be used. Instead of the time, the cycle number of the lithium ion secondary battery 4 may be used as a reference. When the cycle number of the lithium ion secondary battery 4 is used as a reference, the current cycle number of the lithium ion secondary battery 4 is compared with the cycle number of the lithium ion secondary battery 4 of gas generation calculated in S27, and it is determined whether or not the current cycle number of the lithium ion secondary battery 4 has reached the cycle number of the lithium ion secondary battery 4 of gas generation calculated in S27. When it is determined that the gas generation timing has not been reached, S29 is repeated. When it is determined that the gas generation timing has been reached, in S30, by reading and executing the charging control program 64, the processing circuit 17 causes the user interface 20 to display a notice of battery replacement. Upon receiving the instruction, the user interface 20 outputs the notice of battery replacement via an output device.

According to the embodiment, an information processing device, a battery system, a program, and an information processing method that can calculate gas generation timing of a secondary battery are provided.

As described above, according to the present embodiment, the information processing device 3 includes the processing circuit 17 that can calculate the capacity decreasing speed of the lithium ion secondary battery 4 based on the change amount in the capacity maintenance ratio of the lithium ion secondary battery 4, calculate the gas generation speed of the lithium ion secondary battery 4 based on the capacity decreasing speed, and accurately calculate the gas generation timing of the lithium ion secondary battery 4 based on the gas generation speed.

However, the configuration of the information processing device 3 described above is an example, and is not limited to the above configuration. For example, the timer 54 may be included in the measurement unit 5 or may be included outside the secondary battery device 2 such as the information processing device 3 or a cloud. When the timer 54 is included outside the secondary battery device 2, the time downloaded from the outside may be saved in the second storage medium 60 together with the measurement result as the time when the parameter related to the lithium ion secondary battery 4 is measured.

Note that the calculation of the change amount (time history) of the SOH of the lithium ion secondary battery 4 based on the change amount (time history) of the parameter related to the lithium ion secondary battery 4 may be performed by the control circuit 7 of the secondary battery device 2 instead of the processing circuit 17 of the information processing device 3.

The information processing device 3 may be constituted with a plurality of processing devices (computers) such as a plurality of servers. In this case, processors of the plurality of processing devices cooperate to perform the above-described processing in the measurement of the lithium ion secondary battery 4. The information processing device 3 may be constituted with a cloud server in a cloud environment. The infrastructure of the cloud environment is constituted with a virtual processor such as a virtual CPU and a cloud memory. Therefore, in a case where the information processing device 3 is constituted with a cloud server, the virtual processor performs the above-described processing in the measurement of the lithium ion secondary battery 4 instead of the processing circuit 17. Similarly to the second storage medium 60, the cloud memory has a function of storing programs, data, and the like.

The second storage medium 60, which stores programs executed by the processing circuit 17 and data used for the processing of the processing circuit 17, may be provided in a computer separate from the secondary battery device 2 and the information processing device 3. In this case, the information processing device 3 is connected via a network to a computer provided with the second storage medium 60 and the like. The information processing device 3 may be mounted on the secondary battery device 2. In this case, in the information processing device 3, the processor or the like mounted on the secondary battery device 2 performs the above-described processing in the measurement of the lithium ion secondary battery 4 instead of the processing circuit 17.

The program executed by the control circuit 7 may be stored in a computer (server) connected via a network such as the Internet, a server in a cloud environment, or the like. In this case, the control circuit 7 downloads the program via the network. The control circuit 7 performs processing based on a command or the like received from the outside via the first communication module 9.

The power source that supplies power to the lithium ion secondary battery 4 may be mounted on a battery-mounted device or may be provided outside the battery-mounted device. The power supplied from an external power source to the lithium ion secondary battery 4 of the measurement target may be alternating-current power or direct-current power.

Some constituent elements of the information processing device 3 may be separated from the information processing device 3 as an external device with necessary data can be transmitted and received by communication or an electric signal.

In S1, a value other than Vmax may be set as the voltage value A of the lithium ion secondary battery 4, and a value other than Vmin may be set as the voltage value B of the lithium ion secondary battery 4.

The type of gas in S21, S26, and S28 is not limited to $CO_2$. For example, in addition to $CO_2$, when there is a correlation between the gas generation speed and the capacity decreasing speed of $C_2H_6$, $C_3H_8$, or the like, the gas generation timing may be calculated based on the correlation.

In S27, by reading and executing the timing calculation program 68, the processing circuit 17 may calculate the timing at which the amount of gas exceeding a predetermined value is generated. At this time, the predetermined value is not limited to the dissolution amount calculated by the dissolution amount calculation program 65, and a fixed value set by the user or a value stored in an external server or the like may be used.

In S29, the processing circuit 17 determines whether or not the current time has reached the gas generation timing calculated in S27 as described above. However, timing before the gas generation timing may be used as a reference for the determination. For example, whether or not the current time reaches the reference may be determined based on the date and time one week before the gas generation timing calculated in S27. When the cycle number of the lithium ion secondary battery 4 is used as a reference in S27, whether or not the current cycle number has reached the reference may be determined based on 50 cycles before the gas generation timing calculated in S27, for example. By making the determination earlier than the gas generation timing in S29, it is possible to display a notice of battery replacement or the like earlier in S30. However, values such as one week and 50 cycles are examples, and the difference from the gas generation timing is not limited to these values. The difference from the gas generation timing may be set in advance, or may be settable by the user via the user interface 20 or the like.

The processing in the gas generation timing calculation shown in Fig. 4 may be repeatedly executed. The processing circuit 17 can update the capacity decreasing speed of the lithium ion secondary battery 4 after calculating the gas generation timing, can update the gas generation speed of the lithium ion secondary battery 4 based on the updated capacity decreasing speed, can update the gas generation timing of the lithium ion secondary battery 4 based on the updated gas generation speed, and can replace the existing gas generation timing with the updated gas generation timing when the existing gas generation timing is different from the updated gas generation timing. By repeatedly executing the processing in the gas generation timing calculation and updating the value calculated by each processing, it is possible to accurately calculate the gas generation timing more suitable for the use status of the secondary battery. For example, when the use status of the secondary battery including the temperature and the usage time changes, the gas generation timing calculated in S27 can be corrected.

(Second embodiment)

Fig. 6 is a flowchart showing an example of processing in charging of the lithium ion secondary battery 4 in the second embodiment. The processing shown in this flowchart is executed when charging of the lithium ion secondary battery 4 is started, and thereafter, the processing is called from the main routine at predetermined time intervals and repeatedly executed.

When charging and discharging of the lithium ion secondary battery 4 are started in S40, by reading and executing the gas generation speed calculation program 67, the processing circuit 17 calculates in S41 the gas generation speed in the lithium ion secondary lithium ion secondary battery 4. The calculation method is similar to the steps shown in S20 to S26 described above.

In S42, by reading and executing the charging control program 64, the processing circuit 17 compares a predetermined gas generation speed (reference value) with the gas generation speed calculated in S41. The predetermined gas generation speed is saved in the second storage medium 60, a cloud outside the information processing device 3, or the like. When it is determined that the gas generation speed calculated in S41 is equal to or lower than the predetermined gas generation speed, by reading and executing the charging control program 64, the processing circuit 17 instructs in S43 the secondary battery device 2 via the second communication module 19 to maintain the current practical upper limit voltage of the lithium ion secondary battery 4 at the upper limit voltage Vmax (maintain charging speed). Here, the practical upper limit voltage is a value that can be set as an upper limit voltage value when the lithium ion secondary battery 4 is practically used, and may be variable. In the secondary battery device 2, the control circuit 7 receives an instruction to maintain the practical upper limit voltage via the first communication module 9, and continues charging with the practical upper limit voltage being set to the upper limit voltage Vmax.

On the other hand, when it is determined in S42 that the gas generation speed calculated in S41 exceeds the predetermined value, the processing circuit 17 controls in S44 the practical upper limit voltage of the lithium ion secondary battery 4 to be lower than the upper limit voltage Vmax of the use range of the lithium ion secondary battery 4. This is because, if charging is continued at a value higher than the predetermined gas generation speed without lowering the practical upper limit voltage, the internal pressure of the lithium ion secondary battery 4 may continue to increase. At this time, by reading and executing the charging control program 64, the processing circuit 17 sets the practical upper limit voltage of the lithium ion secondary battery 4 to be lower than the upper limit voltage Vmax of the voltage range in which the lithium ion secondary battery 4 can be used. The processing circuit 17 transmits the content of the instruction to the secondary battery device 2 via the second communication module 19. In the secondary battery device 2, the control circuit 7 receives an instruction to decrease the practical upper limit voltage via the first communication module 9, and controls the charging method so as to perform charging at lower than a predetermined practical upper limit voltage. As the practical upper limit voltage of the lithium ion secondary battery 4 set in S44, a predetermined fixed value may be set in advance, or an appropriate value may be selected in accordance with the characteristics, use application, and operating condition of the lithium ion secondary battery 4. This practical upper limit voltage may be saved in the second storage medium 60 or may be called and used each time from a cloud outside the information processing device 3.

Subsequently, in S45, by reading and executing the charging control program 64, the processing circuit 17 determines whether or not the charging of the lithium ion secondary battery 4 has been completed. When it is determined that the charging has not been completed, the process returns to S41, and by reading and executing the gas generation speed calculation program 67, the processing circuit 17 calculates the real-time gas generation speed again. This is repeated until it is determined that charging has been completed. When it is determined in S45 that the charging has been completed, the charging is terminated in S46.

As described above, according to the present embodiment, by calculating the capacity decreasing speed of the lithium ion secondary battery 4 from the SOH of the lithium ion secondary battery 4 of the measurement target, calculating the gas generation speed corresponding to the capacity decreasing speed, and controlling the practical upper limit voltage to equal to or lower than a predetermined value, the information processing device 3 can perform charging or charging/discharging while suppressing gas generation.

However, the configuration of the information processing device 3 described above is an example, and is not limited to the above configuration. For example, some constituent elements of the information processing device 3 may be separated from the information processing device 3 as an external device with necessary data can be transmitted and received by communication or an electric signal.

The terms "equal to or greater than" and "equal to or less than" used in the present embodiment can be appropriately changed to "greater than" and "less than", respectively, depending on the embodiment. Similarly, the terms "equal to or higher than" and "equal to or lower than" used in the present embodiment can be appropriately changed to "higher than" and "lower than", respectively, depending on the embodiment.

Although some embodiments of the present invention have been described, these embodiments are presented by way of example and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are also included in the scope of the invention described in the claims and equivalents thereof.

Furthermore, the present disclosure includes examples according to the following supplementary notes.

[Supplementary Note 1]

An information processing device including

a processing circuit that calculates
a capacity decreasing speed of a secondary battery based on a change amount of a capacity maintenance ratio of the secondary battery,
a gas generation speed of the secondary battery based on the capacity decreasing speed, and
gas generation timing of the secondary battery based on the gas generation speed.

[Supplementary Note 2]

The information processing device according to Supplementary Note 1, wherein

the processing circuit calculates
the gas generation speed based on a ratio between the capacity decreasing speed and the gas generation speed.

[Supplementary Note 3]

The information processing device according to Supplementary Note 1 or 2, wherein

the processing circuit calculates
a time required from a predetermined time to the gas generation timing based on the gas generation speed.

[Supplementary Note 4]

The information processing device according to any one of Supplementary Notes 1 to 3, wherein

the processing circuit calculates
a cycle number required from a predetermined cycle number to the gas generation timing based on the gas generation speed.

[Supplementary Note 5]

The information processing device according to any one of Supplementary Notes 1 to 4 wherein

the processing circuit calculates
a gas dissolution amount of the secondary battery based on a weight of an electrolyte solution of the secondary battery and a temperature of the electrolyte solution.

[Supplementary Note 6]

The information processing device according to any one of Supplementary Notes 1 to 5, wherein

when the gas generation speed exceeds a predetermined value,
the processing circuit controls
a practical upper limit voltage of the secondary battery to be lower than an upper limit voltage of a use range of the secondary battery.

[Supplementary Note 7]

The information processing device according to any one of Supplementary Notes 1 to 6, wherein

the processing circuit,
after calculating the gas generation timing,
updates the capacity decreasing speed of the secondary battery,
updates the gas generation speed of the secondary battery based on the capacity decreasing speed having been updated,
updates the gas generation timing of the secondary battery based on the gas generation speed having been updated, and
replaces the gas generation timing with the updated gas generation timing when the gas generation timing is different from the updated gas generation timing.

[Supplementary Note 8]

The information processing device according to any one of Supplementary Notes 1 to 7, wherein

a positive electrode of the secondary battery contains
$LiNi_xCo_yMn_{(1-x-y)}O_2$ (x is 0.5 or more and 0.9 or less)

[Supplementary Note 9]

The information processing device according to any one of Supplementary Notes 1 to 8, wherein

a negative electrode of the secondary battery contains
lithium titanate, niobium titanium oxide, or carbon.

[Supplementary Note 10]

A battery system including:

the information processing device according to any one of Supplementary Notes 1 to 9; and
a secondary battery subjected to information processing by the information processing device.

[Supplementary Note 11]

The battery system according to Supplementary Note 10 including
a user interface that outputs information related to information processing of the secondary battery and accept an input related to information processing of the secondary battery.

[Supplementary Note 12]

A program that causes

a processing circuit to
calculate a capacity decreasing speed of a secondary battery based on a change amount of a capacity maintenance ratio of the secondary battery,
calculate a gas generation speed of the secondary battery based on the capacity decreasing speed of the secondary battery, and
calculate gas generation timing of the secondary battery based on the gas generation speed.

[Supplementary Note 13]

An information processing method including:

a step of calculating a capacity decreasing speed of a secondary battery based on a change amount of a capacity maintenance ratio of the secondary battery;
a step of calculating a gas generation speed of the secondary battery based on the capacity decreasing speed; and
a step of calculating gas generation timing of the secondary battery based on the gas generation speed.

## Claims

**1.** An information processing device comprising

a processing circuit that calculates
a capacity decreasing speed of a secondary battery based on a change amount of a capacity maintenance ratio of the secondary battery,
a gas generation speed of the secondary battery based on the capacity decreasing speed, and
gas generation timing of the secondary battery based on the gas generation speed.

**2.** The information processing device according to claim 1, wherein

the processing circuit calculates
the gas generation speed based on a ratio between the capacity decreasing speed and the gas generation speed.

**3.** The information processing device according to claim 1 or 2, wherein

the processing circuit calculates
a time required from a predetermined time to the gas generation timing based on the gas generation speed.

**4.** The information processing device according to any one of claims 1 to 3, wherein

the processing circuit calculates
a cycle number required from a predetermined cycle number to the gas generation timing based on the gas generation speed.

**5.** The information processing device according to any one of claims 1 to 4, wherein

the processing circuit calculates
a gas dissolution amount of the secondary battery based on a weight of an electrolyte solution of the secondary battery and a temperature of the electrolyte solution.

**6.** The information processing device according to any one of claims 1 to 5, wherein

when the gas generation speed exceeds a predetermined value,
the processing circuit controls a practical upper limit voltage of the secondary battery to become lower than an upper limit voltage of a use range of the secondary battery.

**7.** The information processing device according to any one of claims 1 to 6, wherein

the processing circuit,

after calculating the gas generation timing,
updates the capacity decreasing speed of the secondary battery,
updates the gas generation speed of the secondary battery based on the capacity decreasing speed having been updated,
updates the gas generation timing of the secondary battery based on the gas generation speed having been updated, and
replaces the gas generation timing with the updated gas generation timing when the gas generation timing is different from the updated gas generation timing.

**8.** The information processing device according to any one of claims 1 to 7, wherein

a positive electrode of the secondary battery contains
$LiNi_xCo_yMn_{(1-x-y)}O_2$ (x is 0.5 or more and 0.9 or less).

**9.** The information processing device according to any one of claims 1 to 8, wherein
a negative electrode of the secondary battery contains lithium titanate, niobium titanium oxide, or carbon.

**10.** A battery system comprising:

the information processing device according to any one of claims 1 to 9; and
a secondary battery subjected to information processing by the information processing device.

**11.** The battery system according to claim 10, comprising
a user interface that outputs information related to information processing of the secondary battery and accept an input related to information processing of the secondary battery.

**12.** A program that causes

a processing circuit to
calculate a capacity decreasing speed of a secondary battery based on a change amount of a capacity maintenance ratio of the secondary battery,
calculate a gas generation speed of the secondary battery based on the capacity decreasing speed of the secondary battery, and
calculate gas generation timing of the secondary battery based on the gas generation speed.

**13.** An information processing method comprising:

a step of calculating a capacity decreasing speed of a secondary battery based on a change amount of a capacity maintenance ratio of the secondary battery;
a step of calculating a gas generation speed of the secondary battery based on the capacity decreasing speed; and
a step of calculating gas generation timing of the secondary battery based on the gas generation speed.

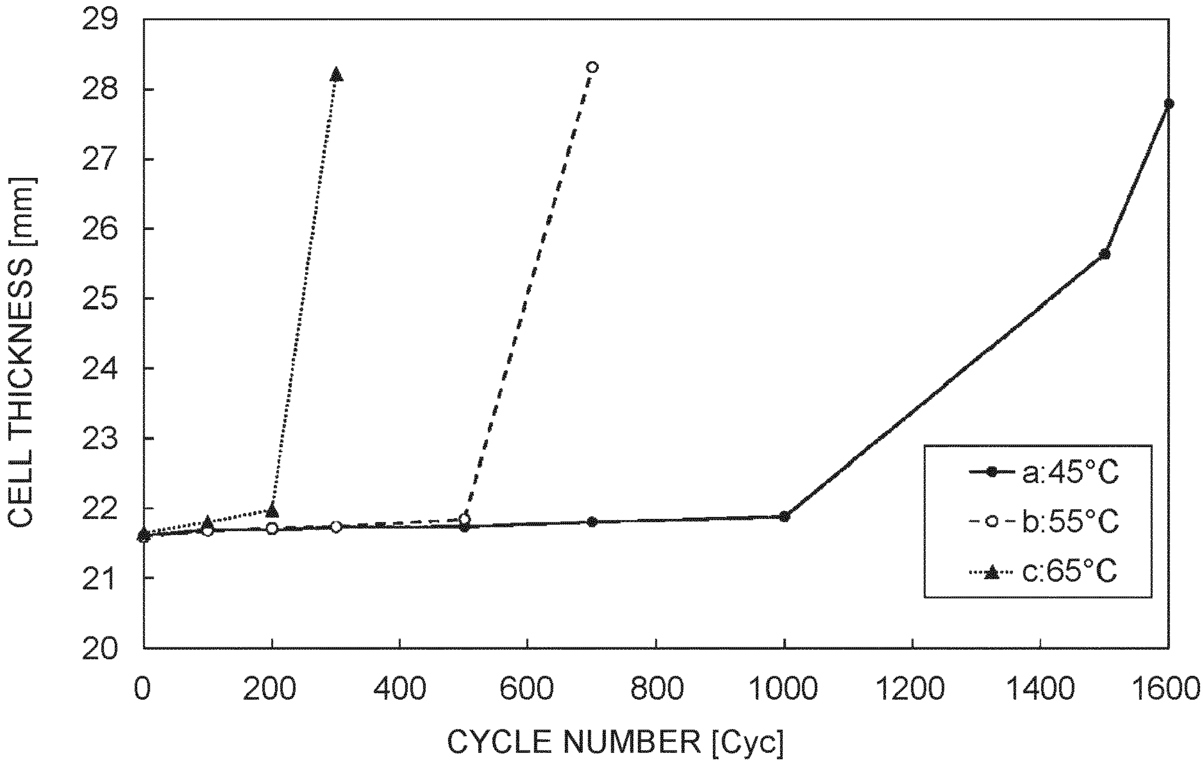
29
28
27
26
25
24
23
22
21
20
CELL THICKNESS [mm]
0
200
400
600
800
1000
1200
1400
1600
CYCLE NUMBER [Cyc]
a:45°C
b:55°C
c:65°C

FIG. 1

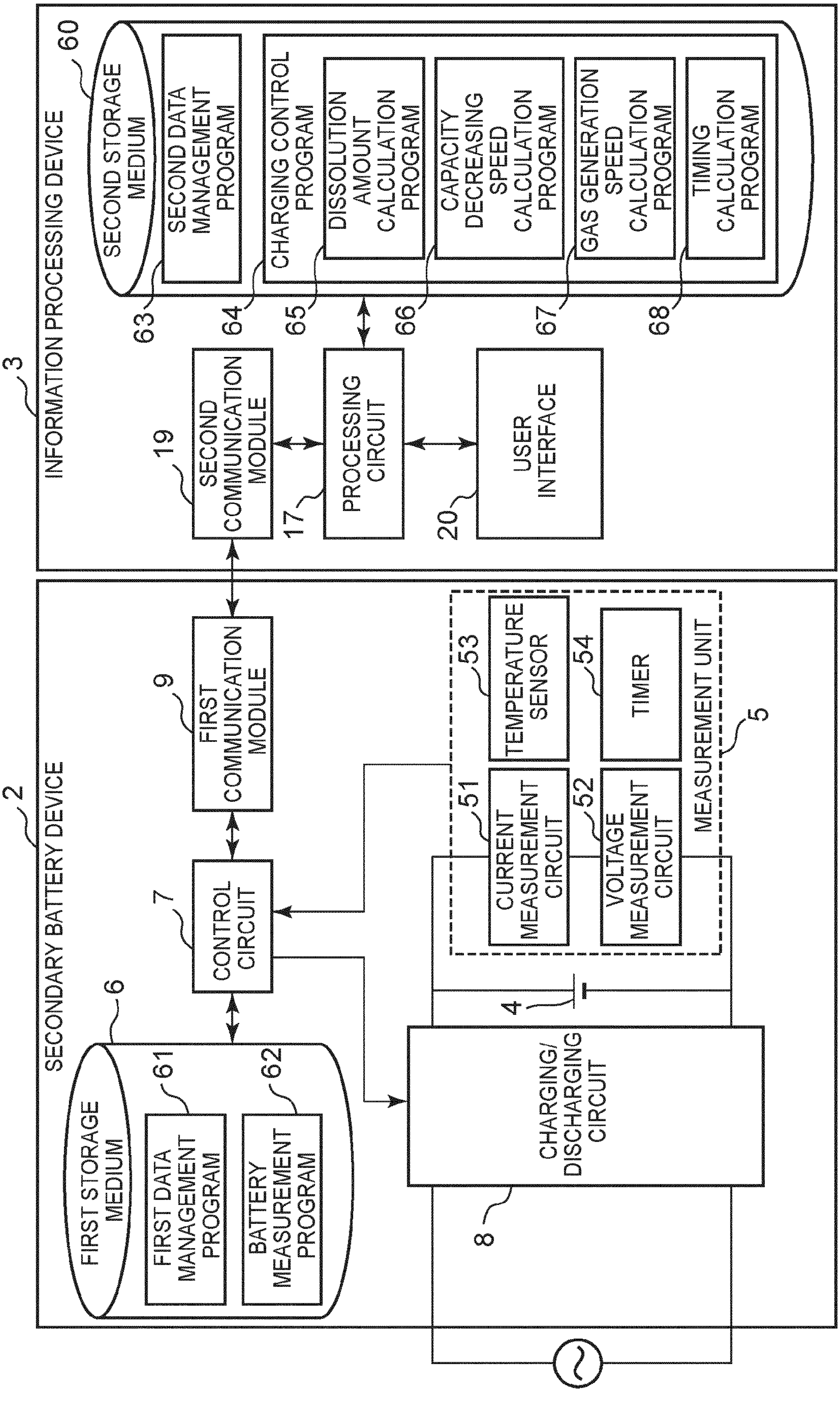


FIG. 2

1: BATTERY SYSTEM

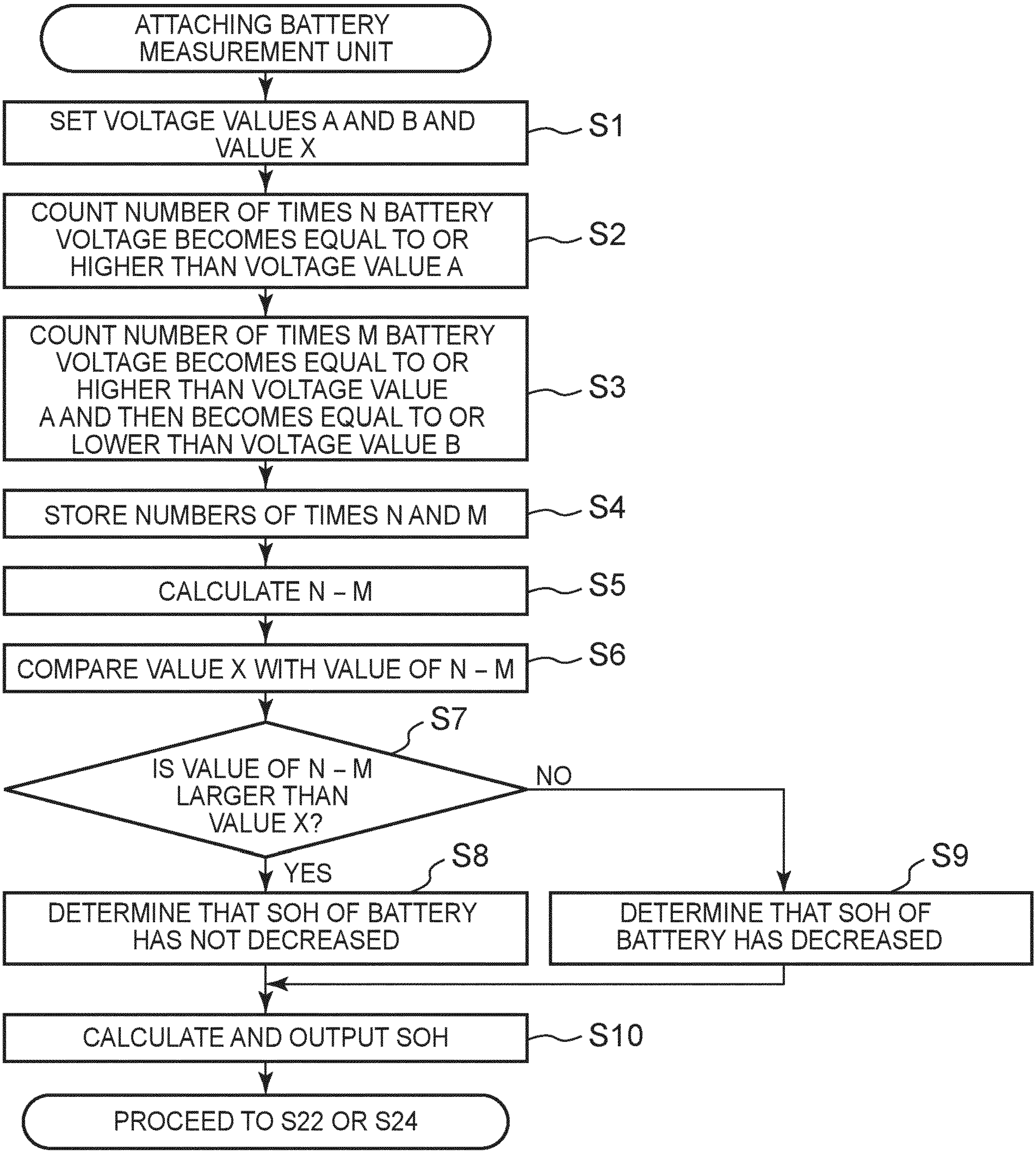
ATTACHING BATTERY MEASUREMENT UNIT
SET VOLTAGE VALUES A AND B AND VALUE X
S1
COUNT NUMBER OF TIMES N BATTERY VOLTAGE BECOMES EQUAL TO OR HIGHER THAN VOLTAGE VALUE A
S2
COUNT NUMBER OF TIMES M BATTERY VOLTAGE BECOMES EQUAL TO OR HIGHER THAN VOLTAGE VALUE A AND THEN BECOMES EQUAL TO OR LOWER THAN VOLTAGE VALUE B
S3
STORE NUMBERS OF TIMES N AND M
S4
CALCULATE N – M
S5
COMPARE VALUE X WITH VALUE OF N – M
S6
S7
IS VALUE OF N – M LARGER THAN VALUE X?
NO
YES
S8
DETERMINE THAT SOH OF BATTERY HAS NOT DECREASED
S9
DETERMINE THAT SOH OF BATTERY HAS DECREASED
CALCULATE AND OUTPUT SOH
S10
PROCEED TO S22 OR S24

FIG. 3

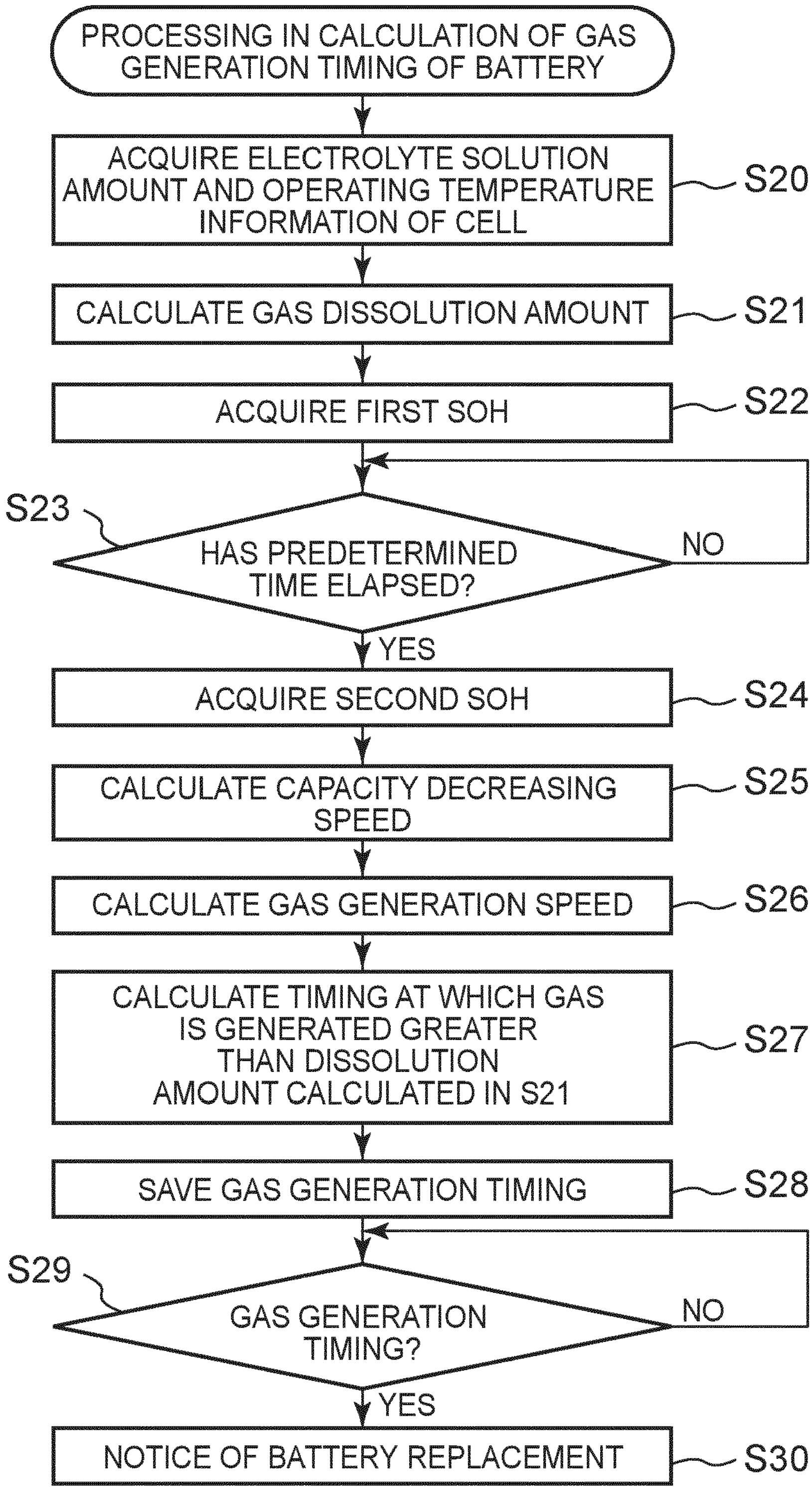
PROCESSING IN CALCULATION OF GAS GENERATION TIMING OF BATTERY
ACQUIRE ELECTROLYTE SOLUTION AMOUNT AND OPERATING TEMPERATURE INFORMATION OF CELL
S20
CALCULATE GAS DISSOLUTION AMOUNT
S21
ACQUIRE FIRST SOH
S22
S23
HAS PREDETERMINED TIME ELAPSED?
NO
YES
ACQUIRE SECOND SOH
S24
CALCULATE CAPACITY DECREASING SPEED
S25
CALCULATE GAS GENERATION SPEED
S26
CALCULATE TIMING AT WHICH GAS IS GENERATED GREATER THAN DISSOLUTION AMOUNT CALCULATED IN S21
S27
SAVE GAS GENERATION TIMING
S28
S29
GAS GENERATION TIMING?
NO
YES
NOTICE OF BATTERY REPLACEMENT
S30

FIG. 4

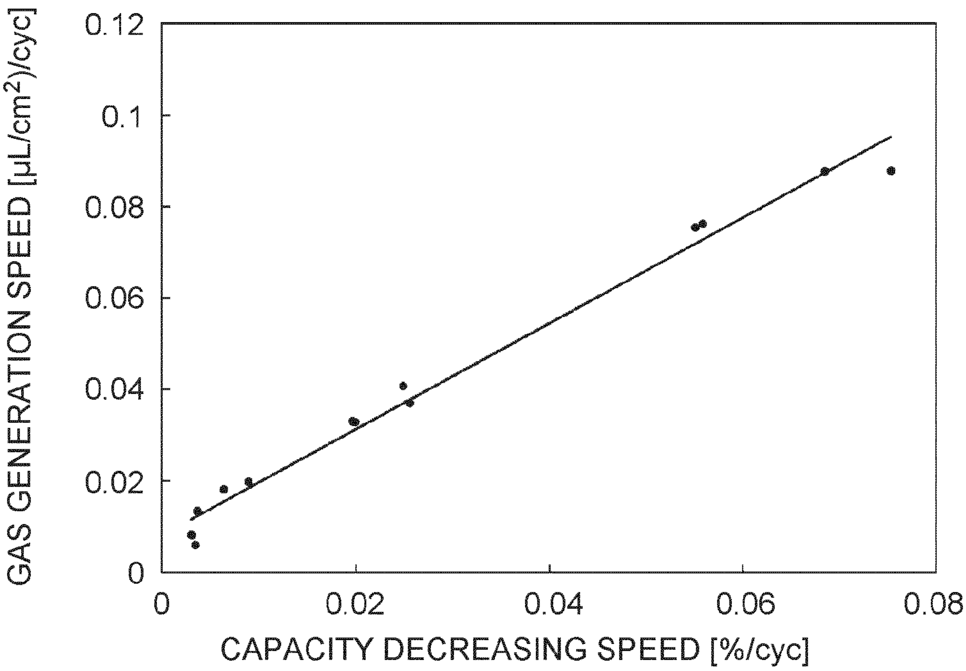
GAS GENERATION SPEED [μL/cm2)/cyc]
0.12
0.1
0.08
0.06
0.04
0.02
0
0
0.02
0.04
0.06
0.08
CAPACITY DECREASING SPEED [%/cyc]

FIG. 5

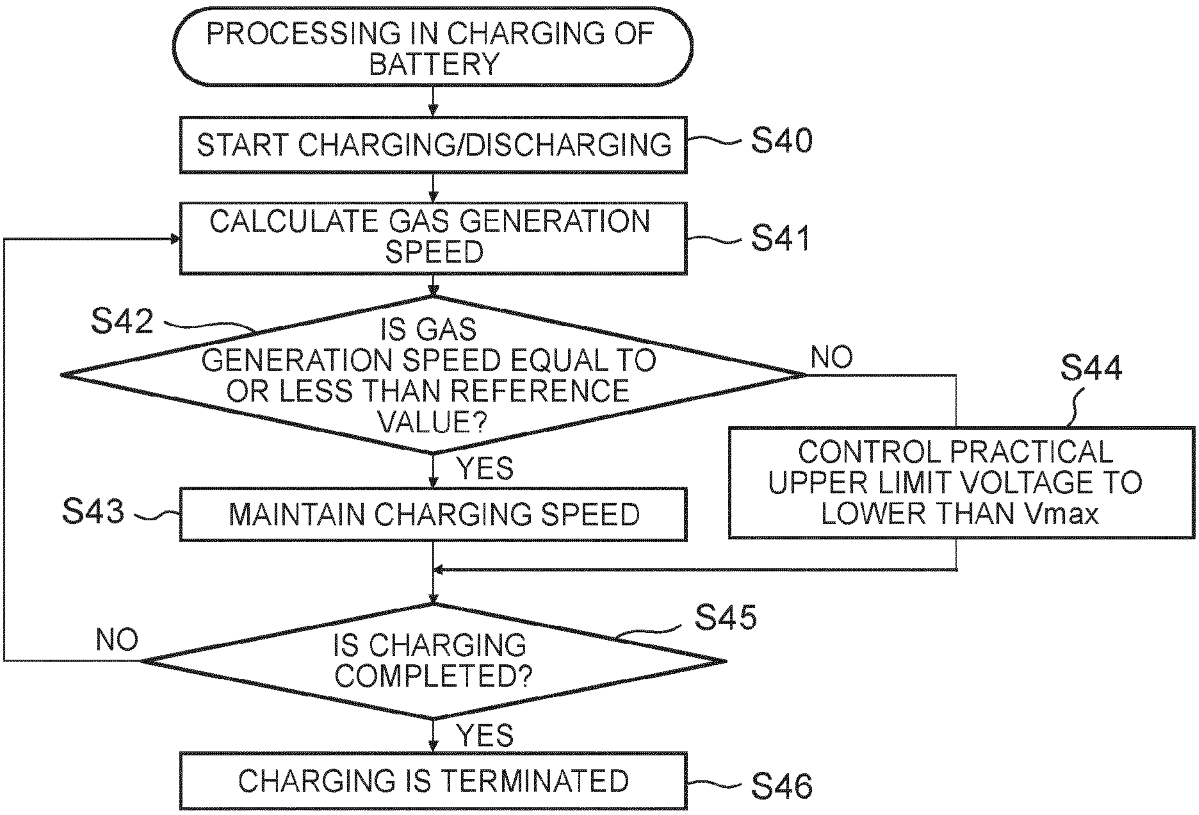
PROCESSING IN CHARGING OF BATTERY
START CHARGING/DISCHARGING
S40
CALCULATE GAS GENERATION SPEED
S41
S42
IS GAS GENERATION SPEED EQUAL TO OR LESS THAN REFERENCE VALUE?
NO
S44
YES
S43
MAINTAIN CHARGING SPEED
CONTROL PRACTICAL UPPER LIMIT VOLTAGE TO LOWER THAN Vmax
S45
NO
IS CHARGING COMPLETED?
YES
CHARGING IS TERMINATED
S46

FIG. 6

Europäisches Patentamt
European Patent Office
Office européen des brevets

# EUROPEAN SEARCH REPORT

Application Number
EP 23 19 1793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2011 239573 A (TOYOTA MOTOR CORP) 24 November 2011 (2011-11-24) * paragraphs [0040], [0041], [0044], [0045], [0047] * | 1-13 | INV. H01M10/42 H01M10/44 ADD. H01M4/505 H01M4/525 H01M10/0525 H01M10/52 |
| X | US 2019/148796 A1 (YOSHIDA YUKIHIRO [JP] ET AL) 16 May 2019 (2019-05-16) * paragraphs [0002], [0008], [0009], [0025] - [0032] * | 1-13 | |
| A | GONG WENJUN ET AL: "Life Prediction of Lithium Ion Batteries for Electric Vehicles Based on Gas Production Behavior Model", 2017 INTERNATIONAL CONFERENCE ON SENSING, DIAGNOSTICS, PROGNOSTICS, AND CONTROL (SDPC), IEEE, 16 August 2017 (2017-08-16), pages 275-280, XP033269840, DOI: 10.1109/SDPC.2017.60 [retrieved on 2017-12-11] * the whole document * | 1-13 | TECHNICAL FIELDS SEARCHED (IPC) |
| A | KIM JAEKWANG ET AL: "State of health monitoring by gas generation patterns in commercial 18,650 lithium-ion batteries", JOURNAL OF ELECTROANALYTICAL CHEMISTRY, ELSEVIER, AMSTERDAM, NL, vol. 907, 19 November 2021 (2021-11-19), XP086960512, ISSN: 1572-6657, DOI: 10.1016/J.JELECHEM.2021.115892 [retrieved on 2021-11-19] * the whole document * | 1-13 | H01M |

-/--

The present search report has been drawn up for all claims

1

| Place of search | Date of completion of the search | Examiner |
|---|---|---|
| The Hague | 12 June 2024 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 23 19 1793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KUMAI K ET AL: "Gas generation mechanism due to electrolyte decomposition in commercial lithium-ion cell", JOURNAL OF POWER SOURCES, ELSEVIER, AMSTERDAM, NL, vol. 81-82, 1 September 1999 (1999-09-01), pages 715-719, XP004363249, ISSN: 0378-7753, DOI: 10.1016/S0378-7753(98)00234-1 * the whole document * ----- | 1-13 | |

TECHNICAL FIELDS SEARCHED (IPC)

1

The present search report has been drawn up for all claims

| Place of search | Date of completion of the search | Examiner |
|---|---|---|
| The Hague | 12 June 2024 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 19 1793

This annex lists the patent family members relating to the patent documents cited in the above-mentioned European search report. The members are as contained in the European Patent Office EDP file on
The European Patent Office is in no way liable for these particulars which are merely given for the purpose of information.

12-06-2024

| Patent document cited in search report | Publication date | Patent family member(s) | Publication date |
|---|---|---|---|
| JP 2011239573 A | 24-11-2011 | JP 5527001 B2 | 18-06-2014 |
| | | JP 2011239573 A | 24-11-2011 |
| US 2019148796 A1 | 16-05-2019 | DE 112016006872 T5 | 14-02-2019 |
| | | JP 6385620 B2 | 05-09-2018 |
| | | JP WO2017199326 A1 | 13-09-2018 |
| | | US 2019148796 A1 | 16-05-2019 |
| | | WO 2017199326 A1 | 23-11-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023037435 A
- JP 2011239573 A

### Non-patent literature cited in the description

- **ABIR GHOSH et al.** *Journal of The Electrochemical Society,* 2021, vol. 168, 020509